(19) Europäisches Patentamt
European Patent Office
Office européen des brevets

(11) EP 0 673 954 B1

(12) **FASCICULE DE BREVET EUROPEEN**

(45) Date de publication et mention de la délivrance du brevet:
**28.04.1999 Bulletin 1999/17**

(51) Int Cl.$^6$: **C08F 297/04**

(21) Numéro de dépôt: **95400334.9**

(22) Date de dépôt: **16.02.1995**

(54) **Amorceurs difonctionnels dérivés du 1,5-diéthényl-naphtalène pour polymérisation anionique et procédé de polymérisation les utilisant**

Difunktionele Initiatoren für die anionische Polymerisation abgeleitet von 1,5-diethenylnaphthales und Polymerisationverfahren in der die verwendet werden

Difunctional initiators for anionic polymerisation derived from 1,5-diethenylnaphtalene and polymerisation process in which they are used

(84) Etats contractants désignés:
**BE CH DE ES FR GB IT LI NL SE**

(30) Priorité: **24.03.1994 FR 9403487**

(43) Date de publication de la demande:
**27.09.1995 Bulletin 1995/39**

(73) Titulaire: **ELF ATOCHEM S.A.**
**92800 Puteaux, Hauts-de-Seine (FR)**

(72) Inventeurs:
- **Nugay, Turgut**
**TR-06610 Cankaya, Ankara (TR)**
- **Riess, Gérard**
**F-68200 Mulhouse (FR)**

(74) Mandataire: **Luziau, Nelly**
**ELF ATOCHEM S.A.,**
**Département Propriété Industrielle,**
**4-8, Cours Michelet,**
**La Défense 10 - Cedex 42**
**92091 Paris-La-Défense (FR)**

(56) Documents cités:
**DE-A- 2 003 384**

- **POLYMER INTERNATIONAL, vol. 29,no. 3, 1992 pages 195-199, TURGUT NUGAY ET AL 'A New Difunctional anionic initiator Soluble in Non-polar Solvents'**
- **RECUEIL DES TRAVAUX CHIMIQUES DES PAYS-BAS, vol. 88,no. 9, Septembre 1969 DEN HAAG NL, pages 1028-1040, H. VAN BEKKUM ET AL 'Synthesis of 1,4-, 1,5-, 2,6- and 2,7-Di-t-butylnaphthalene and of 1,4-, 1,5-, 2,6- and 1,8-Diisopropylnaphthalene'**
- **MAKROMOLEKULARE CHEMIE, MACROMOLECULAR CHEMISTRY AND PHYSICS, vol. 185,no. 7, Juillet 1984 BASEL CH, pages 1565-1582, T. BASTELBERGER ET AL 'New divinylidene compounds and their reaction with electron transfer reagents'**
- **SYNTHESIS, no. 5, Mai 1989 STUTTGART DE, pages 356-359, K. BLATTER ET AL 'A convenient Synthesis of Some (1-Alkylethenyl)arenes and Bis(1-alkylethenyl)arenes'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 673 954 B1

Printed by Jouve, 75001 PARIS (FR)

## Description

La présente invention porte sur de nouveaux dérivés du 1,5-diéthényl naphtalène, sur un procédé permettant de les préparer, ainsi que sur leur utilisation comme précurseurs d'amorceurs difonctionnels en polymérisation anionique, ces dérivés du naphtalène étant, à cette occasion, amenés à réagir avec un composé organique d'un métal alcalin.

Les composés organiques des métaux alcalins, comme les composés organo dilithio, sont particulièrement intéressants comme amorceurs difonctionnels en polymérisation anionique, car le mode opératoire à trois étapes, nécessaire dans la préparation de copolymères séquencés de type ABA par un amorçage monofonctionnel, est réduit d'une étape par l'utilisation d'amorceurs difonctionnels. Ces derniers sont également importants en copolymérisation lorsque le second monomère est incapable de réamorcer la polymérisation du premier.

De nombreux copolymères séquencés ont été préparés avec des naphtalides de métaux alcalins comme amorceurs difonctionnels. Ces derniers ne sont efficaces que dans des milieux polaires, tels que le tétrahydrofuranne, pour la polymérisation de monomères diéniques notamment. Cependant, ils ne sont pas capables de fournir une microstructure polydiénique à teneur élevée en configuration 1,4 (cis ou trans).

Toutes les fois qu'une microstructure spéciale, en général, une addition cis-1,4 pour les polydiènes, est souhaitée, la polymérisation anionique doit être conduite dans un solvant apolaire avec le métal alcalin, comme lithium, comme contre-ion. Malheureusement, probablement en raison de la formation d'associats, les composés organiques de métaux alcalins, comme les composés organo dilithio, ont une faible solubilité dans les solvants hydrocarbonés. Des essais d'augmentation de la solubilité par de très faibles quantités d'éther ou d'amines, ont montré que ces additifs affectent la microstructure du bloc diénique. L'inconvénient de la technique d'ensemencement est l'obtention d'un indice de dispersion élevé pour la séquence centrale.

De nombreux composés ont à ce jour été étudiés comme pouvant être des amorceurs difonctionnels au lithium, solubles dans les solvants apolaires.

On peut citer, entre autres, le brevet américain US-A-4200718, colonne 14, qui décrit le composé de formule :

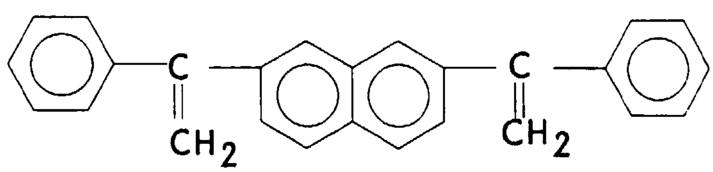

que l'on fait réagir avec le butyllithium secondaire pour obtenir le [2,7-naphtalènediylbis(3-méthyl-1-phényl pentylidène]-bis(lithium), amorceur en polymérisation anionique du butadiène.

Turgut Nugay & Savas Küçükyavuz ont également décrit, dans Polym. International, 29, 195, 1992, la préparation du 1,5-diéthényl naphtalène, et sa réaction avec le sec.-butyllithium dans le n-heptane, en l'absence de tout additif polaire, conduisant au 1,5-bis(1-lithio-3-méthylpentyl)naphtalène. Ce dernier a été facilement isolé et débarrassé des composés monofonctionnels solubles. Il a été utilisé, à l'état dissous dans le benzène (solubilité : $3,2 \times 10^{-2}$ mole/litre), comme amorceur dans la copolymérisation séquencée de l'isoprène et du styrène.

On a cherché, cependant, à obtenir encore une meilleure solubilité dans les solvants apolaires et un meilleur contrôle du caractère difonctionnel de cet amorceur naphtalénique 1,5-disubstitué.

A cet effet, il est proposé selon la présente invention, une nouvelle famille de dérivés du 1,5-diéthényl naphtalène répondant à cet objectif.

La présente invention a donc d'abord pour objet un composé représenté par la formule (I) :

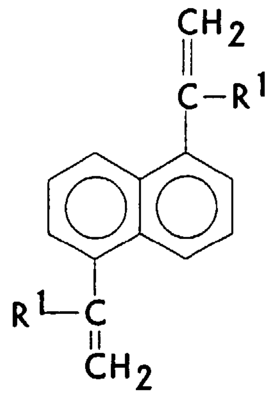

(I)

dans laquelle $R^1$ représente un radical alkyle, linéaire, ramifié ou cyclique, ayant de 1 à 12 atomes de carbone, ou un radical aryle substitué ou non.

Parmi les radicaux alkyle entrant dans la définition de $R^1$, on peut citer plus particulièrement le radical méthyle, et parmi les radicaux aryle entrant dans la définition de $R^1$, on peut citer plus particulièrement le radical phényle.

La présente invention a également pour objet un procédé de préparation du composé (I) tel que défini ci-dessus, ce procédé étant caractérisé par le fait que :

- dans une première étape, on fait réagir le composé de formule (II) :

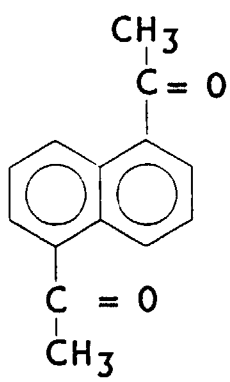

(II)

avec un composé de formule (III) :

$$R^1\text{-M} \qquad \text{(III)}$$

dans laquelle :

- $R^1$ est tel que défini ci-dessus ; et
- M désigne un métal alcalin ou -M'Hal (M' désignant un métal alcalino-terreux et Hal un halogène),

en faisant suivre par une hydrolyse, pour obtenir un composé de formule (IV) :

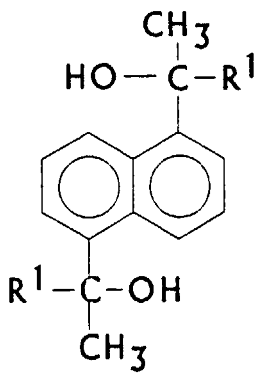

(IV)

et

- dans une deuxième étape, on conduit une déshydratation du composé de formule (IV), ce qui permet d'obtenir le produit attendu.

A la première étape, pour l'addition du composé organométallique (III) sur le composé (II), on utilise les réactifs dans des quantités d'au moins 2 moles de composé (III) pour 1 mole de composé (II), de préférence avec un léger excès du composé (III) par rapport à la quantité stoechiométrique, et on conduit cette addition en milieu solvant aprotique (par exemple, tétrahydrofuranne, toluène, éther éthylique, benzène, éthylbenzène, cyclohexane, et leurs mélanges), la température étant ajustée suivant les réactifs mis en oeuvre, et la durée de la réaction étant de l'ordre de 6 à 24 heures. On fait suivre cette réaction par une hydrolyse dans des conditions de désactivation du produit réactionnel soit par le méthanol acidifié par l'acide acétique, soit par le mélange eau, glace, acide chlorhydrique.

La déshydratation de la deuxième étape peut s'effectuer par exemple en milieu acide acétique/acide sulfurique concentré à reflux, la teneur en acide sulfurique par rapport à l'acide acétique étant notamment de 0,1 à 5% en poids, ou encore en milieu toluène-acide paratoluène sulfonique.

La présente invention a également pour objet un amorceur difonctionnel consistant en le produit de réaction du composé de formule (I), tel que défini ci-dessus, avec un composé de formule (V) :

$$R^2\text{-}M'' \qquad (V)$$

dans laquelle :

- M" représente un métal alcalin, comme le lithium ou le sodium ; et
- $R^2$ est choisi dans le groupe constitué par les radicaux alkyle en $C_1$-$C_6$, cycloalkyle en $C_5$-$C_{12}$ et aromatiques,

le composé (V) pouvant également être un polymère anionique comportant un carbanion terminal $R^2$ et le contre-ion M",

ledit amorceur difonctionnel étant représenté par la formule (VI) suivante :

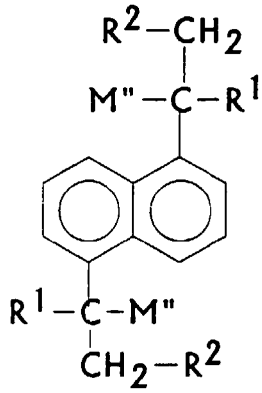

(VI)

$R^2$ représente, de préférence, un groupe butyle secondaire.

Dans le cas où M" représente Li et où le composé organolithien (V) est un polymère anionique - conduisant alors à un amorceur difonctionnel qui permet d'accéder à des polymères en étoile-, le carbanion polymère $R^2$ peut être un carbanion de polymère vinylaromatique, comme le polystyrène et le poly(alpha-méthylstyrène), ou de polymère diénique, comme le polybutadiène et le polyisoprène.

On conduit la synthèse de l'amorceur difonctionnel en faisant réagir les composés (I) et (V) dans des quantités d'au moins 2 moles de composé (V) pour 1 mole de composé (I), notamment avec un léger excès du composé (V) par rapport à la quantité stoechiométrique, en milieu solvant aprotique purifié (des exemples de solvants étant donnés ci-dessus avec référence à l'addition du composé organométallique (III) sur le composé (II)), la polymérisation ultérieure étant conduite par introduction directe des monomères dans le milieu réactionnel. Un léger excès de composé (V) permet de désactiver les impuretés résiduelles protiques du milieu réactionnel.

La présente invention a également pour objet un procédé pour la polymérisation anionique d'au moins un monomère polymérisable avec un composé d'un métal alcalin comme amorceur, caractérisé par le fait que l'on utilise, comme amorceur, l'amorceur difonctionnel tel que défini ci-dessus.

Comme monomère polymérisable, on peut citer les monomères diéniques, vinylaromatiques et (méth)acryliques.

L'expression "monomère diénique", telle qu'employée dans la présente description, désigne un diène choisi parmi les diènes conjugués linéaires ou cycliques, contenant de 1 à 20 atomes de carbone. Des exemples non limitatifs comprennent le butadiène, l'isoprène, le 1,3-pentadiène, le cyclopentadiène et le 6,7,8,9-tétrahydroindène. Les monomères préférés sont le butadiène et l'isoprène.

Les monomères "vinylaromatiques", tels qu'utilisés dans la présente invention, signifient des monomères aromatiques à insaturation éthylénique. Des exemples non limitatifs sont le styrène, le vinyltoluène, l'alphaméthylstyrène, le 4-méthyl-styrène, le 3-méthyl-styrène, le 4-éthylstyrène, le 3,4-diméthyl-styrène, le 3-tert.-butyl-styrène, le 2-vinyl-naphtalène. On peut mettre en oeuvre des dérivés hydroxylés du styrène, comme le 4-méthoxy-styrène, le 2-hydroxyméthyl-styrène et le 4-éthoxy-styrène, à la condition que la fonction OH soit protégée. Le monomère préféré est le styrène.

Le terme "monomère (méth)acrylique", tel qu'employé dans la présente description, signifie un monomère choisi parmi les (méth)acrylates de formule respectivement :

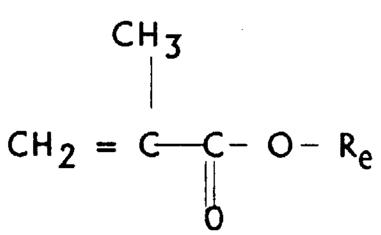 et 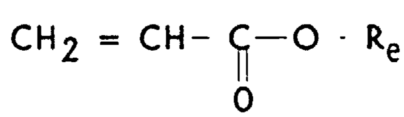

dans laquelle $R_e$ est choisi parmi les radicaux alkyle en $C_1$-$C_{18}$, linéaires ou ramifiés, primaires, secondaires ou tertiaires, cycloalkyle en $C_5$-$C_{18}$, (alcoxy en $C_1$-$C_{18}$)-alkyle en $C_1$-$C_{18}$, (alkylthio en $C_1$-$C_{18}$)-alkyle en $C_1$-$C_{18}$, aryle et aralkyle, ces radicaux étant éventuellement substitués par au moins un atome d'halogène et/ou au moins un groupe hydroxyle après protection de ce groupe hydroxyle, les groupes alkyle ci-dessus étant linéaires ou ramifiés, les (méth)acrylates de glycidyle, de norbornyle, d'isonorbornyle, les di-(alkyl en $C_1$-$C_{18}$)-(méth)acrylamides.

Comme exemples de méthacrylates de la formule ci-dessus, on peut citer les méthacrylates de méthyle, d'éthyle, de 2,2,2-trifluoroéthyle, de n-propyle, d'isopropyle, de n-butyle, de sec.-butyle, de tert.-butyle, de n-amyle, d'i-amyle, de n-hexyle, de 2-éthylhexyle, de cyclohexyle, d'octyle, d'i-octyle, de nonyle, de décyle, de lauryle, de stéaryle, de phényle, de benzyle. Le monomère méthacrylique préféré est le méthacrylate de méthyle.

Comme exemples d'acrylates de la formule ci-dessus, on peut citer les acrylates de méthyle, d'éthyle, de n-propyle, d'isopropyle, de n-butyle, de sec.-butyle, de tert.-butyle, d'hexyle, de 2-éthylhexyle, d'isooctyle, de 3,3,5-triméthylhexyle, de nonyle, d'isodécyle, de lauryle, d'octadécyle, de cyclohexyle, de phényle, de méthoxyméthyle, de méthoxyéthyle, d'éthoxyméthyle et d'éthoxyéthyle.

De manière générale, dans une étape faisant suite à la préparation d'une séquence polymère vivante dans le cas où celle-ci est formée à partir d'au moins un monomère vinylaromatique et/ou diénique, on peut faire réagir cette dernière avec au moins un autre monomère (vinylaromatique, (méth)acrylique ou diénique), le cas échéant en présence d'un ligand, pour obtenir un copolymère triséquencé. Ce ligand peut être choisi parmi, d'une part, les sels minéraux de métaux alcalins ou alcalino-terreux, par exemple les chlorures, fluorures, bromures, iodures, borures, et, d'autre part, les sels organiques de métaux alcalins, par exemple les alcoolates.

On peut citer en particulier la polymérisation anionique d'au moins un monomère diénique en présence d'un solvant apolaire, comme, par exemple, le toluène, le benzène, l'éthylbenzène et leurs mélanges, le cas échéant avec une quantité mineure du cyclohexane. Dans une étape faisant suite à la préparation de la séquence polydiénique vivante, on peut faire réagir cette dernière avec au moins un monomère vinylaromatique ou (méth)acrylique, le cas échéant, en présence d'un ligand tel que, par exemple, celui décrit dans la demande de brevet français n 92-14318, pour obtenir un copolymère triséquencé.

On peut également citer l'obtention de copolymères triséquencés poly(méthacrylate de méthyle) - polymère vinylaromatique ou polymère diénique - poly(méthacrylate de méthyle).

De façon générale, la polymérisation d'un monomère diénique a lieu entre -80°C et +100°C, et, de préférence, entre -70°C et +70°C, et la polymérisation d'un monomère (méth)acrylique a lieu entre -80°C et +60°C et, de préférence, entre -70°C et +20°C, et la polymérisation d'un monomère vinylaromatique, entre -80°C et +100°C, de préférence, entre -70°C et +70°C.

La polymérisation d'un monomère diénique est généralement conduite pendant un laps de temps de 0,5 heure à 24 heures, celle d'un monomère (méth)acrylique pendant un laps de temps inférieur à 1 heure, et celle d'un monomère vinylaromatique entre 0,5 et 24 heures.

Les composés protoniques ajoutés en fin de polymérisation pour désactiver les sites actifs des polymères peuvent être choisis notamment parmi l'eau, les alcools, les acides : on utilise particulièrement le méthanol acidifié.

On peut ultérieurement réduire au moins partiellement l'insaturation résiduelle des séquences polydiène par des techniques d'hydrogénation usuelles afin d'améliorer ses propriétés, notamment la stabilité à la lumière ultraviolette.

Les (co)polymères et copolymères triséquencés tels qu'obtenus avec utilisation de l'amorceur difonctionnel de l'invention ont des applications bien connues en tant qu'élastomères, élastomères thermoplastiques, agents de compatibilisation, etc. Comme matériaux thermoformables, ils peuvent être traités par des procédés tels que le moulage par extrusion et injection pour obtenir des articles comme fibres, revêtements, chaussures. Les copolymères séquencés précités pour lesquels le monomère méthacrylique est le méthacrylate de méthyle, ayant une bonne tenue à la chaleur, sont utiles comme adhésifs sensibles à la pression et comme agents améliorant la résistance au choc et la tenue thermique des polymères, comme décrit dans la demande de brevet français n° 92-14318.

Les exemples suivants illustrent l'invention sans en limiter la portée. Dans ces exemples, les pourcentages sont en poids, sauf indication contraire, et les abréviations suivantes ont été utilisées :

| | |
|---|---|
| DAN = | 1,5-diacétyl-naphtalène |
| PhLi = | phényllithium |
| BPEN = | 1,5-bis( -phényléthényl)naphtalène |
| BPHEN = | 1,5-bis(1-phényl-1-hydroxy-éthyl)naphtalène |
| BMEN = | 1,5-bis(-méthyléthényl)naphtalène |
| BMHEN = | 1,5-bis(1-méthyl-1-hydroxy-éthyl)naphtalène |
| St = | styrène |
| BD = | butadiène |
| sec.-BuLi = | sec.-butyllithium |
| THF = | tétrahydrofuranne |
| SBS = | copolymère triséquencé styrène-butadiène-styrène. |

Exemple 1: Préparation du BPEN.

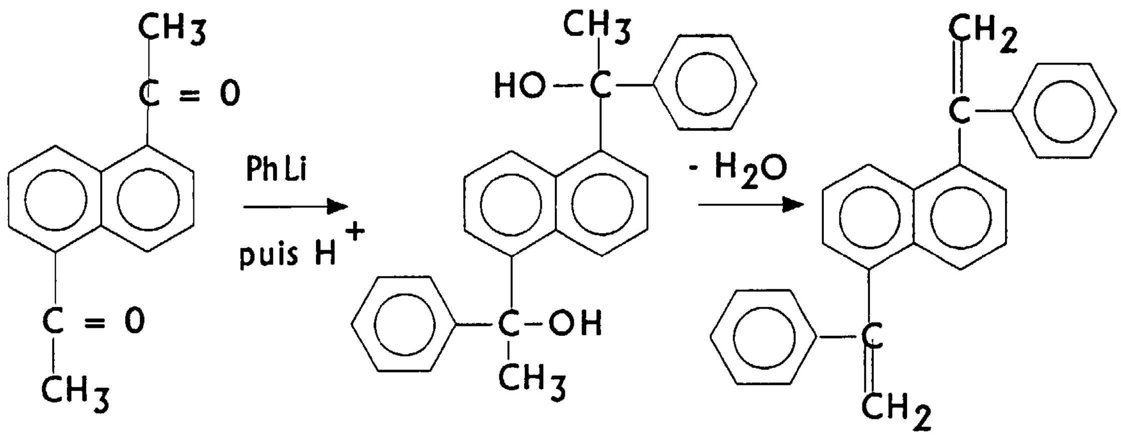


DAN BPHEN BPEN

On a préparé du DAN comme décrit par Stephan, R. dans Chem. Ber., 909 (1957) 296, par action du chlorure d'acétyle sur le naphtalène en présence de trichlorure d'aluminium. Le produit a été cristallisé dans de l'alcool éthylique (rendement : 35 %), avec un point de fusion de 131,9 C.

A l'étape suivante, 5 g (24 mmoles) de DAN ont été dissous dans 50 ml de THF sec et stockés dans une ampoule, sous atmosphère d'azote. Par ailleurs, 200 ml de THF ont été cryodistillés dans un réacteur ayant une capacité de 500 ml, puis 50 mmoles de PhLi (solution 2M dans un mélange benzène/éther) ont été transférées dans le réacteur par l'intermédiaire d'une seringue. On a fait suivre par l'addition, dans le milieu réactionnel, à 5°C, de la solution de DAN dans le THF. La solution est d'abord devenue vert foncé, puis une couleur brique est apparue (réaction hétérogène). La réaction a été conduite pendant 24 heures, et stoppée par ajout de méthanol comprenant 2,8 ml d'acide acétique.

Le précipité blanc de sel de Li de l'acide acétique a été filtré. Une solution jaune clair a ensuite été séparée, et le solvant a été évaporé à l'évaporateur rotatif. Le produit restant était un mélange de composés cristallins et huileux, qui ont été identifiés en RMN $^1H$ et FTIR, comme étant du BPHEN, un dérivé du naphtalène comprenant des groupes 1-hydroxy-éthyle et éthényle, et un peu de DPEN. Ce mélange a ensuite été dissous dans 70 ml d'acide acétique chauffé à la température de reflux ; 0,1 ml d'$H_2SO_4$ concentré a été ajouté au compte-gouttes. La solution a été refroidie, et un produit cristallin de couleur jaune très pâle a été séparé, lavé avec de l'acide acétique froid, et séché. La partie restante du produit a été obtenue après évaporation d'1/3 du solvant. Au total, 3,1 g (39% par rapport au DAN) de BPEN ont été obtenus, p.f.: 184 C.

RMN $^1H$ 200 MHz ($CDCl_3$) $\delta$ 7,80-7,27 (16 H, aromatique),
5,99 (double, 1 H, $=CH_2$),
5,40 (double, 1H, $=CH_2$).

Exemple 2 : Synthèse du BMEN.

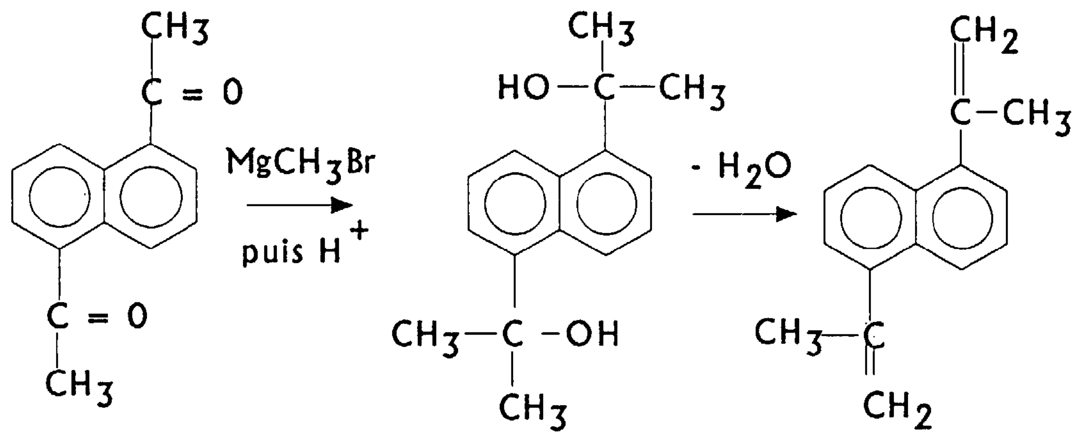


DAN BMHEN BMEN

3 g de DAN (14,2 mmoles) ont été dissous dans 200 ml d'un mélange de toluène/éther diéthylique (1:1, v/v). Le réacteur a été purgé à l'azote sec, et 12 ml de bromure de méthyl magnésium (en excès, solution 3 M dans l'éther diéthylique) ont été ajoutés goutte à goutte par l'intermédiaire d'une seringue. Un précipité jaune s'est formé immédiatement. Le milieu réactionnel a été chauffé au reflux, et la réaction a été conduite pendant 24 heures.

Le produit a ensuite été versé sur 200 g d'un mélange eau-glace, qui comprenait 20 ml d'HCl ; un précipité blanc s'est formé. Le solide a été filtré (au-dessus de 90% de conversion), et caractérisé par RMN $^1$H et FTIR, ce qui a montré la formation de BMHEN.

6,4 g de BMHEN ont été dissous dans l'acide acétique et chauffés à la température de reflux. 0,1 ml d'$H_2SO_4$ concentré a été ajouté. La solution a été refroidie et filtrée. Un solide de couleur rouge a été lavé avec de l'acide acétique froid. Le rendement en BMEN était de 8%.
RMN$^1$H 200 MHz ($CDCl_3$)

RMN $^1$H 200 MHz ($CDCl_3$) 7,81-7,26 (6 H, aromatique),
5,99 (double, 1 H, =$CH_2$),
5,40 (double, 1H, = $CH_2$).

Exemple 3 :

$$.BPEN + sec.BuLi \xrightarrow{BD} Li^{+\,-}PBD^{-}Li^{+} \xrightarrow{St} Li^{+\,-}(PSt - PBD - PSt)^{-}Li^{+}$$

On engage 0,1 g (3 x $10^{-4}$ mole) de BPEN dans un réacteur de polymérisation, préalablement séché sous vide pendant 5 heures. Par cryodistillation, on rajoute 500 ml de toluène purifié et séché.

Pour solubiliser le BPEN dans le toluène, la température est remontée de -70°C à 0°C. En opérant sous atmosphère inerte d'azote et d'argon, on rajoute quelques gouttes d'une solution de sec.-BuLi au mélange réactionnel jusqu'à persistance d'une légère coloration verte. Cette opération est destinée à éliminer les impuretés résiduelles.

A cette température de 0°C, on additionne ensuite 0,45 ml d'une solution 1,4 molaire de sec.BuLi (soit 6,3 x $10^{-4}$ mole) au mélange réactionnel, lequel se colore alors immédiatement en vert foncé. A ce stade, on observe la formation ni de précipité, ni de dispersion colloïdale, et ceci pendant un stockage de plusieurs heures. Ceci constitue une preuve que l'amorceur est soluble dans le toluène à 0°C.

On cryodistille ensuite 28,5 g (0,53 mole) de butadiène dans le réacteur à -40°C. Après cette addition de butadiène, on porte la température tout d'abord à 0°C, où l'on note l'apparition d'un précipité, puis à +30°C, température à laquelle ce précipité se solubilise. La réaction se déroule ensuite pendant 24 heures à + 30°C.

Un échantillon du polybutadiène formé à ce stade est prélevé et analysé par RMN et GPC. Les caractéristiques

sont les suivantes :

$\overline{Mn}$ = 99 000
Structure 1-4 = 91,5%

La masse molaire calculée proche de la masse théorique (Mn théorique = 95 000) confirme la meilleure solubilité et le meilleur contrôle du caractère difonctionnel de l'amorceur.
Au milieu réactionnel qui est devenu visqueux, on ajoute 10 g (0,096 mole) de styrène préalablement purifié. On note l'apparition d'une coloration orangée caractéristique des anions polystyryle. La réaction est poursuivie pendant 24 heures à la température ambiante, avant désactivation par du méthanol. Le copolymère SBS, récupéré par précipitation dans le méthanol, filtration et séchage, est ensuite analysé par RMN et GPC.
Les caractéristiques du copolymère SBS sont les suivantes :

- teneur en PBD : 69% en masse
- teneur en PSt : 31% en masse
- $\overline{Mn}$ = 143 000 (valeur déterminée d'après la $M_n$ de la séquence PBD et la composition obtenue par RMN).
- indice de polydispersité = 1,50.

<u>Exemple 4</u>

$$.BPEN + sec.BuLi \xrightarrow{BD} Li^{+\,-}PBD^{-}Li^{+} \xrightarrow{St} Li^{+-}(PSt - PBD - PSt)^{-}Li^{+}$$

On procède comme dans l'Exemple 3, en engageant 0,2 g de BPEN (6 x $10^{-4}$ mole) et 0,90 ml (12,6 x $10^{-4}$ mole) de sec.-BuLi. Les proportions de butadiène et de styrène sont les mêmes que celles indiquées dans l'Exemple 3.
La séquence de polybutadiène PBD obtenue dans ces conditions a une valeur de Mn de 47 600 et une teneur en structure 1-4 de 92,9 %. L'excellente correspondance entre la masse molaire calculée et la masse molaire théorique ($\overline{Mn}$ théorique = 47 500) confirme la meilleure solubilité et le caractère difonctionnel de l'amorceur.
Les caractéristiques du copolymère SBS obtenu sont les suivantes :

- teneur en polybutadiène : 71% en masse
- teneur en polystyrène : 29% en masse
- $\overline{Mn}$ : 67 400
- Indice de polydispersité = 1,40.

<u>Exemple 5</u>

$$.BPEN + sec.BuLi \xrightarrow{BD} Li^{+\,-}PBD^{-}Li^{+} \xrightarrow{St} Li^{+-}(PSt - PBD - PSt)^{-}Li^{+}$$

On procède comme dans l'Exemple 3, en engageant 0,127 g (6,1 x $10^{-4}$ mole) de BMEN et 0,90 ml (12,6 x $10^{-4}$ mole) de sec.-BuLi. On engage tout d'abord 24,5 g (0,45 mole) de butadiène qu'on polymérise comme indiqué à l'Exemple 3. La séquence polybutadiène obtenue dans ces conditions a une valeur de $\overline{Mn}$ de 41 000, un indice de polydispersité de 1,20, et une teneur en structure 1-4 de 92 % On poursuit la polymérisation comme indiqué pour l'exemple 3, en rajoutant au système 10 g de styrène, soit de 0,096 mole.
En fin de polymérisation, on récupère un copolymère séquencé SBS de masse moléculaire $\overline{Mn}$ = 59 000, et dont la teneur en polybutadiène, déterminée par RMN du proton ($^1$H RMN), représente 70 % en masse.

## Revendications

1. Amorceur difonctionnel en polymérisation anionique consistant en le produit de réaction du composé représenté par la formule (I) :

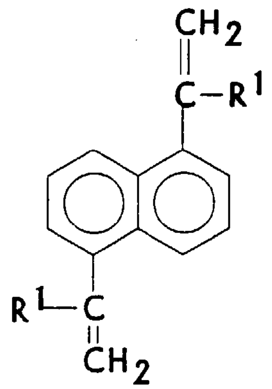

(I)

dans laquelle $R^1$ représente un radical alkyle linéaire, ramifié ou cyclique, ayant de 1 à 12 atomes de carbone, ou un radical aryle substitué ou non,

avec un composé de formule (V) :

$$R^2\text{-}M'' \qquad (V)$$

dans laquelle :

- M'' représente un métal alcalin ; et
- $R^2$ est choisi dans le groupe constitué par les radicaux alkyle en $C_1$-$C_6$, cycloalkyle en $C_5$-$C_{12}$ et aromatiques,

le composé (V) pouvant également être un polymère anionique comportant un carbanion terminal $R^2$ et le contre-ion M''.

**2.** Amorceur difonctionnel selon la revendication 1, caractérisé par le fait que $R^1$ représente un radical méthyle.

**3.** Amorceur difonctionnel selon la revendi-cation 1, caractérisé par le fait que $R^1$ représente un radical phényle.

**4.** Amorceur difonctionnel selon l'une des revendications 1 à 3, caractérisé par le fait que M'' représente le lithium.

**5.** Amorceur difonctionnel selon l'une des revendications 1 à 4, caractérisé par le fait que $R^2$ représente un groupe butyle secondaire.

**6.** Amorceur difonctionnel selon l'une des revendications 1 à 3, caractérisé par le fait que M'' représente Li et $R^2$ représente un carbanion terminal d'un polymère organolithien, qui est un carbanion d'un polymère vinylaromatique ou diénique.

**7.** Procédé pour la polymérisation anionique d'au moins un monomère polymérisable avec un composé d'un métal alcalin comme amorceur, caractérisé par le fait que l'on utilise, comme amorceur, l'amorceur difonctionnel tel que défini à l'une des revendications 1 à 6.

**8.** Procédé selon la revendication 7, caractérisé par le fait qu'on utilise, comme monomères polymérisables, les monomères diéniques, vinylaromatiques et (méth)acryliques.

**9.** Procédé selon la revendication 8, caractérisé par le fait que l'on conduit la polymérisation anionique d'au moins un monomère diénique comme le butadiène et l'isoprène, en présence d'un solvant apolaire.

**10.** Procédé selon la revendication 9, caractérisé par le fait que l'on utilise un solvant apolaire choisi notamment parmi le toluène, le benzène, l'éthylbenzène et leurs mélanges.

**11.** Procédé selon l'une des revendications 7 à 10, caractérisé par le fait que, dans une étape ultérieure, on fait réagir la séquence vivante, dans le cas où celle-ci est formée à partir d'au moins un monomère vinylaromatique et/ou

diénique, avec au moins un autre monomère, le cas échéant en présence d'un ligand, pour obtenir un copolymère triséquencé.

**12.** Procédé selon la revendication 11, caractérisé par le fait qu'il conduit à un copolymère triséquencé polymère vinylaromatique - polymère diénique - polymère vinylaromatique, poly(méthacrylate de méthyle) - polymère vinylaromatique ou polymère diénique - poly(méthacrylate de méthyle).

**13.** Procédé selon l'une des revendications 8 à 12, caractérisé par le fait que la polymérisation d'un monomère diénique a lieu entre -80°C et +100°C, et, de préférence, entre -70°C et +70°C, la polymérisation d'un monomère (méth) acrylique a lieu entre -80°C et +60°C et, de préférence, entre -70°C et +20°C, et la polymérisation d'un monomère vinylaromatique, entre -80°C et +100°C, de préférence, entre -70°C et +70°C.

**14.** Procédé selon l'une des revendications 8 à 13, caractérisé par le fait que la polymérisation d'un monomère diénique est conduite pendant un laps de temps de 0,5 heure à 24 heures, celle d'un monomère (méth)acrylique pendant un laps de temps inférieur à 1 heure, et celle d'un monomère vinylaromatique entre 0,5 et 24 heures.

**15.** Utilisation des (co)polymères et copolymères triséquencés obtenus par un procédé tel que défini à l'une des revendications 7 à 14, comme élastomères, élastomères thermoplastiques, agents de compatibilisation, comme matériaux thermoformables pouvant être traités par des procédés tels que le moulage par extrusion et injection, ou pour les copolymères séquencés pour lesquels le monomère méthacrylique est le méthacrylate de méthyle, comme adhésifs sensibles à la pression et comme agents améliorant la résistance au choc et la tenue thermique des polymères.

## Claims

**1.** Difunctional initiator of anionic polymerization, consisting of the reaction product of the compound represented by the formula (I) :

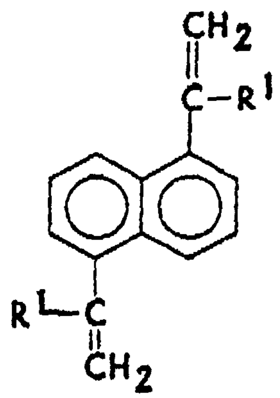

(I)

in which $R^1$ represents a linear, branched or cyclic alkyl radical having from 1 to 12 carbon atoms or a substituted or unsubstituted aryl radical,

with a compound of formula (V):

$$R^2\text{-}M'' \qquad (V)$$

in which:

- M" represents an alkali metal; and
- $R^2$ is chosen from the group consisting of $C_1$-$C_6$ alkyl, $C_5$-$C_{12}$ cycloalkyl and aromatic radicals,

it also being possible for the compound (V) to be an anionic polymer comprising an $R^2$ terminal carbanion

and the M" counterion.

2. Difunctional initiator according to Claim 1, characterized in that $R^1$ represents a methyl radical.

3. Difunctional initiator according to Claim 1, characterized in that $R^1$ represents a phenyl radical.

4. Difunctional initiator according to one of Claims 1 to 3, characterized in that M" represents lithium.

5. Difunctional initiator according to one of Claims 1 to 4, characterized in that $R^2$ represents a secondary butyl group.

6. Difunctional initiator according to one of Claims 1 to 3, characterized in that M" represents Li and $R^2$ represents a terminal carbanion of an organolithium polymer which is a carbanion of a vinylaromatic or diene polymer.

7. Process for the anionic polymerization of at least one polymerizable monomer with a compound of an alkali metal as initiator, characterized in that use is made, as initiator, of the difunctional initiator as defined in one of Claims 1 to 6.

8. Process according to Claim 7, characterized in that use is made, as polymerizable monomers, of diene, vinylaromatic and (meth)acrylic monomers.

9. Process according to Claim 8, characterized in that the anionic polymerization is carried out of at least one diene monomer, such as butadiene and isoprene, in the presence of a nonpolar solvent.

10. Process according to Claim 9, characterized in that use is made of a nonpolar solvent chosen in particular from toluene, benzene, ethylbenzene and their mixtures.

11. Process according to one of Claims 7 to 10, characterized in that, in a subsequent stage, the living block, in the case where the latter is formed from at least one vinylaromatic and/or diene monomer, is reacted with at least one other monomer, if appropriate in the presence of a ligand, in order to obtain a triblock copolymer.

12. Process according to Claim 11, characterized in that it results in a vinylaromatic polymer-diene polymer-vinylaromatic polymer or poly(methyl methacrylate)-vinylaromacic polymer or diene polymer-poly(methyl methacrylate) triblock copolymer.

13. Process according to one of Claims 8 to 12, characterized in that the polymerization of a diene monomer takes place between -80°C and +100°C and preferably between -70°C and +70°C, the polymerization of a (meth)acrylic monomer takes place between -80°C and +60°C and preferably between -70°C and +20°C and the polymerization of a vinylaromatic monomer between -80°C and +100°C, preferably between -70°C and +70°C.

14. Process according to one of Claims 8 to 13, characterized in that the polymerization of a diene monomer is carried out for a period of time of 0.5 hour to 24 hours, that of a (meth)acrylic monomer for a period of time of less than 1 hour and that of a vinylaromatic monomer for a period of time of between 0.5 and 24 hours.

15. Use of the (co)polymers and triblock copolymers obtained by a process as defined in one of Claims 7 to 14 as elastomers, thermoplastic elastomers or compatibilization agents, as thermoformable materials which can be treated by processes such as moulding by extrusion and injection, or, for block copolymers for which the methacrylic monomer is methyl methacrylate, as pressure-sensitive adhesives and as agents for improving the impact strength and the thermal behaviour of polymers.

**Patentansprüche**

1. Bifunktioneller Starter für die anionische Polymerisation enthaltend ein Reaktionsprodukt einer Verbindung, dargestellt durch die Formel (I):

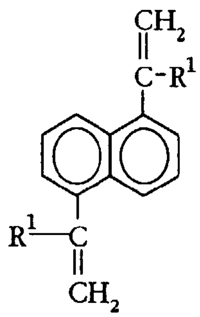

(I)

in der $R^1$ einen linearen, verzweigten oder cyclichen Alkylrest mit 1 bis 12 Kohlenstoffatomen oder einen gegebenenfalls substituierten Arylrest bedeutet
mit einer Verbindung der Formel (V):

$$R^2\text{-M"} \qquad (V)$$

in der:

- M" ein Alkalimetall darstellt; und
- $R^2$ aus der Gruppe von $C_1$-$C_6$ Alkyl-, $C_5$-$C_{12}$ Cycloalkyl- und aromatischen Resten ausgewählt ist, und

die Verbindung (V) auch ein anionisches Polymeres mit einem endständigen Carbanion und dem Gegenion M" sein kann.

**2.** Bifunktioneller Starter nach Anspruch 1, dadurch gekennzeichnet, daß $R^1$ ein Methylrest ist.

**3.** Bifunktioneller Starter nach Anspruch 1, dadurch gekennzeichnet, daß $R^1$ ein Phenylrest ist.

**4.** Bifunktioneller Starter nach einem der Ansprüche 1 bis 3, dadurch gekennzeichnet, daß M" Lithium ist.

**5.** Bifunktioneller Starter nach einem der Ansprüche 1 bis 4, dadurch gekennzeichnet, daß $R^2$ eine sekundäre Butylgruppe ist.

**6.** Bifunktioneller Starter nach einem der Ansprüche 1 bis 3, dadurch gekennzeichnet, daß M" Lithium ist und $R^2$ ein endständiges Carbanion eines Organolithiumpolymers ist, das ein Carbanion eines polymeren Vinylaromaten oder Dienes ist.

**7.** Verfahren zur anionischen Polymerisation von mindestens einem polymerisierbaren Monomeren mit ein einer Alkalimetall enthaltenden Verbindung als Starter, dadurch gekennzeichnet, daß man als Starter den nach einem der Ansprüche 1 bis 6 definierten bifunktionellen Starter verwendet.

**8.** Verfahren nach Anspruch 7, dadurch gekennzeichnet, daß man als polymerisierbares Monomeres monomere Diene, Vinylaromaten und (Meth)acrylate verwendet.

**9.** Verfahren nach Anspruch 8, dadurch gekennzeichnet, daß man die anionische Polymerisation mindestens eines monomeren Diens, wie Butadien und Isopren, in Gegenwart eines unpolaren Lösungsmittels durchführt.

**10.** Verfahren nach Anspruch 9, dadurch gekennzeichnet, daß man ein unpolares Lösungsmittel verwendet, insbesondere Toluol, Benzol, Ethylbenzol und deren Mischungen.

**11.** Verfahren nach einem der Ansprüche 7 bis 10, dadurch gekennzeichnet, daß man in einem zusätzlichen Schritt eine lebende Sequenz reagieren läßt, wenn diese wenigstens aus einem vinylaromatischen und/oder dienischen Monomeren mit mindestens einem anderen Monomeren gebildet wird, möglicherweise in Gegenwart eines Liganden, um ein dreisequenziges Copolymer zu erhalten.

**12.** Verfahren nach Anspruch 11, dadurch gekennzeichnet, daß es zu einem dreisequenzigen vinylaromatischen Copolymer - Dienpolymer - vinylaromatischen Polymer, Poly(methylmethacrylat)- vinylaromatischen Polymer oder Dienpolymer - Poly(methylmethacrylat) führt.

**13.** Verfahren nach einem der Ansprüche 8 bis 12, dadurch gekennzeichnet, daß die Polymerisation eines monomeren Dienes zwischen -80 °C und +100 °C und bevorzugt zwischen -70 °C und +70 °C durchgeführt wird, die Polymerisation eines monomeren (Meth)acrylats zwischen -80 °C und +60 °C und bevorzugt zwischen -70 °C und +20 °C, und die Polymerisation eines monomeren Vinylaromaten zwischen -80 °C und +100 °C, bevorzugt zwischen -70 °C und +70 °C.

**14.** Verfahren nach einem der Ansprüche 8 bis 13, dadurch gekennzeichnet, daß die Polymerisation eines monomeren Dienes während einer Dauer von 0,5 Stunden bis 24 Stunden, die eines (Meth)acrylmonomeren während einer Zeitdauer unterhalb einer Stunde und die eines vinylaromatischen Monomeren zwischen 0,5 und 24 Stunden erfolgt.

**15.** Verwendung von (Co)polymeren und Copolymertrisequenzen, erhalten nach einem in einem der Ansprüche 7 bis 14 definierten Verfahren, als Elastomere, thermoplastische Elastomere, Mittel zur gegenseitigen Verträglichkeit, als thermoformbares Material, das nach Verfahren, wie Formung durch Extrusion oder Injektion behandelt sein kann, oder für Copolymersequenzen für die das Methacrylatmonomer ein Methylmethacrylat ist, wie druckempfindliche Klebstoffe und Mittel zur Verbesserung der Stoßfestigkeit und des thermischen Verhaltens der Polymere.